# EUROPÄISCHE PATENTANMELDUNG

(11) **EP 1 043 068 A2**
(43) Veröffentlichungstag der Anmeldung: **11.10.2000**
(21) Anmeldenummer: 00102033.8
(22) Anmeldetag: 02.02.2000
(51) Int. Cl.: B01J 37/02, B01J 35/10

(54) **Verfahren zur Herstellung eines Katalysators**

(30) Priorität: 30.03.1999 US 281326
(71) Anmelder: XCELLSIS GmbH, 73230 Kirchheim / Teck-Nabern (DE)
(72) Erfinder: Bachinger, Patrick, 73252 Lenningen (DE); Dülk, Christian, 97294 Unterpleichfeld (DE); Keppeler, Berthold, 73230 Kirchheim/Teck (DE); Stengel, Thomas, 88045 Friedrichshafen (DE); Waidelich, Dagmar, 71364 Winnenden-Hanweiler (DE)
(74) Vertreter: Kocher, Klaus-Peter Dipl.-Phys

(57) **Zusammenfassung**

Die Erfindung betrifft ein Verfahren zur Herstellung eines Katalysators, bei dem ein katalysatorhaltiges Material mit einem Lösungsmittel vermischt und auf einem über den Siedepunkt des Lösungsmittels erwärmten Substrat abgeschieden wird, wobei zur Herstellung einer Suspension ein Lösungsmittel und ein Pulver aus katalytisch aktivem Material und/oder aus katalytisch beschichteten Trägerpartikeln verwendet wird, die Suspension in einer Spritzmasse in definierter Weise auf das Substrat aufgespritzt und eine katalysatorhaltige Schicht gebildet wird.

## Beschreibung

Die Erfindung betrifft ein Verfahren zur Herstellung eines Katalysators gemäß dem Oberbegriff des Patentanspruchs 1.

In der DE 16 42 921 C3 ist ein Verfahren beschrieben, in dem eine honigartige Suspension auf kugelförmige Steatit-Träger aufgebracht wird. Die Suspension enthält ein Lösungsmittel und fein verteiltes, suspendiertes Titandioxid und eine Lösung einer Vanadiumverbindung oder gelöstes Vanadiumpentoxid. Die Kugeln werden gegebenenfalls grundiert und in eine beheizte Dragiertrommel gegeben. In der Dragiertrommel werden die Kugeln statistisch hin und her bewegt und gleichzeitig mit der Suspension besprüht. Die Bewegung sorgt dafür, daß die Kugeln von allen Seiten mit der Suspension in Berührung kommen. Das Lösungsmittel verdampft dabei aus der Suspension und hinterläßt eine Schicht mit Titandioxid-Partikeln, die auf der Oberfläche der Steatit-Kugeln haftet. Die in der Suspension gelöste Vanadiumverbindung kristallisiert aus und schlägt sich als katalytisch aktives Material auf den Titandioxid-Partikeln nieder.

Es ist weiterhin bekannt, Katalysatoren, z.B. Abgaskatalysatoren für Kraftfahrzeuge oder chemische Reaktoren, durch Beschichtung eines Substrat mit einem Katalysatormaterial herzustellen. Ein Grundkörper wird z.B. mit einer Aufschlämmung, welche feinkörniges katalytisch aktives Material und organische oder anorganische Lösungsmittel enthält, z.B. durch Eintauchen oder Benetzen in Kontakt gebracht oder in befeuchtetem Zustand in einem pulverförmigen Katalysatormaterial gewälzt. Solche Verfahren sind in der DE 29 47 702 A1 oder der DE 25 26 238 A1 beschrieben. Um eine ausreichende Haftung zwischen Katalysatormaterial und Substrat zu ermöglichen, ist es bekannt, das Substrat vor der Beschichtung mit einer Haftvermittlerschicht zu überziehen, deren Dicke üblicherweise um 10 µm liegt. Ohne Haftvermittler ist die Haftung der Schicht häufig nur ungenügend. Das Lösungsmittel wird anschließend durch Erhitzen des beschichteten Substrats ausgetrieben.

Zwar sind die bekannten Verfahren technisch einfach durchzuführen, die so hergestellten Katalysatorschichten zeigen jedoch eine Reihe von Nachteilen.

Die Beschichtung ist völlig unselektiv hinsichtlich des Beschichtungsorts und der Beschichtungsmenge des Katalysatormaterials auf dem Substrat. Zur Erzielung einer ausreichenden Haftung zwischen Beschichtung und Substrat wird üblicherweise ein zusätzlicher Haftvermittler oder eine entsprechende Grundierung (z.B. einen sogen. Washcoat) vor der Beschichtung aufgebracht. Trotzdem ist die Haftfestigkeit unter Betriebsbedingungen häufig mangelhaft. So sind z.B. bei tauchbeschichteten Abgaskatalysatoren für PKW nach längerer Betriebszeit merkliche Austräge von Katalysatormaterial zu beobachten; die Katalysatorschicht wird im Betrieb wegerodiert. Übliche Tauchschichten sind nicht schlagfest. Werden sie mechanischen Stößen ausgesetzt, so löst sich das Katalysatormaterial vom Substrat. Außerdem verschlechtert die Haftvermittlerschicht die thermische Ankopplung des Katalysatormaterials an das Substrat.

Ein weiteres Problem ist, daß nicht jedes Substrat beschichtbar ist. So wird ein Stahlsubstrat zur Erzielung einer besseren Haftung üblicherweise vor der Beschichtung bei hohen Temperaturen oxidiert. Ein aluminiumhaltiger Stahl bildet dann an der Oberfläche ein dickes Aluminiumoxid mit rauher Oberfläche. Die rauhe Oxidoberfläche verbessert die Haftung der Schicht. Dieses Verfahren ist jedoch bei aluminiumfreiem Edelstahl (VA) nicht anwendbar, da sich keine Oxidschicht als Haftvermittler bilden kann.

Auf unebenen, winkligen oder strukturierten Grundkörpern ist es praktisch nicht möglich, eine gleichmäßige Schichtdicke einzustellen, da die Benetzung des Substrats mit der Schicht von dessen Geometrie und von der Oberflächenspannung der Beschichtungsmasse abhängig ist. Aber auch bei ebenen Substraten ist die Dickengleichmäßigkeit der Beschichtung nicht ausreichend, da z.B. Tauchschichten zum Susbtratrand hin eine erhöhte Dicke aufweisen. Eine deutliche Inhomogenität der Beschichtung ist nicht nur in lateraler, sondern auch in vertikaler Richtung zu beobachten. So sinken etwa Körner der Beschichtungsmasse mit größerem Durchmesser oder Gewicht beim Trocknen nach unten, so daß die Korngrößenverteilung in der abgeschiedenen Schicht grundsätzlich ungleichmäßig ist. Es ist ebensowenig möglich, etwa ein Konzentrationsprofil des katalytisch aktiven Materials entlang einer Längsrichtung des Substrats einzustellen.

Es ist die Aufgabe der Erfindung, ein Verfahren zur Herstellung eines Katalysators anzugeben, welches die gezielte Abscheidung eines Katalysatormaterials mit großer aktiver Oberfläche und guter Haftfestigkeit auf einem Substrat ermöglicht.

Diese Aufgabe wird bei einem Verfahren gemäß dem Oberbegriff des Patentanspruchs 1 durch die kennzeichnenden Merkmale des Anspruchs gelöst. Weitere Vorteile und Ausgestaltungen der Erfindung gehen aus den weiteren Ansprüchen und der Beschreibung hervor.

Erfindungsgemäß wird ein Katalysator hergestellt, indem eine Schicht aus Katalysatormaterial mit einer Spritzvorrichtung auf ein Substrat in definierter Weise aufgespritzt wird. Die auftreffenden Partikel sind unmittelbar auf dem Substrat fixiert. Zur Herstellung einer Suspension wird ein Lösungsmittel und ein Pulver aus katalytisch aktivem Material und/oder aus katalytisch beschichteten Trägerpartikeln verwendet. Die Suspension wird in einer Spritzmasse in definierter Weise auf das Substrat aufgespritzt, das Lösungsmittel verdampft beim Auftreffen der Spritzmasse auf das Substrat und hinterläßt eine katalysatorhaltige Schicht.

Bevorzugt wird die Substrattemperatur beim Spritzen so eingestellt, daß das Lösungsmittel beim Auftreffen der Spritzmasse auf das Substrat schnell verdampft. Das Beschichtungsmaterial wird dadurch örtlich fixiert und kann nicht mehr auf der Oberfläche des Substrats fließen und verlaufen. Gleichzeitig wird verhindert, daß sich die Beschichtung nach Größe und/oder Gewicht der Partikel entmischt. Es können dabei grundsätzlich sehr dünne, homogene Schichten erzielt werden. Die Bewegung zwischen Substrat und Spritzvorrichtung erfolgt in definierter, kontrollierter Weise.

Mit dem erfindungsgemäßen Verfahren gelingt die Herstellung eines Katalysators, welcher durch eine prinzipiell konturgetreue Beschichtung eines Substrats ausgezeichnet ist und gleichzeitig die Möglichkeit bietet, die Schicht in ihren geometrischen und chemischen Eigenschaften lokal differenziert zu gestalten. Dabei kann etwa auf einfache Weise ein Konzentrationsgefälle des katalytisch aktiven Materials eingestellt werden, sowie in weiten Bereichen eine lokal differenzierte Beschichtung ermöglicht werden. Es können Katalysatoren mit maßgeschneiderten Eigenschaften hergestellt werden.

Der erfindungsgemäß hergestellte Katalysator weist weiterhin eine deutlich verbesserte Haftfestigkeit der Beschichtung auf dem Substrat sowie eine große Erosionsfestigkeit auf. Insbesondere sind die erfindungsgemäß abgeschiedenen Schichten schlagfest. Es ist auch möglich, erfindungsgemäß beschichtete Bleche bei Temperaturen um 1000°C zu löten, ohne daß die Katalysatorschicht abplatzt.

Es können ebene und gekrümmte Substrate beschichtet werden, z.B. Bleche, Geflechte, Schäume.

Da auf Haftvermittlerschichten verzichtet werden kann, ist die thermische Ankopplung des Katalysatormaterials an das Substrat sehr gut.

Bevorzugt ist das Lösungsmittel polar, besonders bevorzugt ist das Lösungsmittel Wasser. Der Vorteil liegt darin, daß Wasser als Medium einfach und unproblematisch zu handhaben ist.

Besonders günstig ist, Substrat und Spritzvorrichtung relativ zueinander zu bewegen, bevorzugt parallel zueinander. Die Bewegung kann so eingestellt werden, daß eine homogene Schicht mit gleichmäßiger Dicke oder etwa eine Schicht mit definierter Dickenänderung aufgespritzt wird. Es ist auch möglich, das Substrat mit einer Maskierung, insbesondere einer Lochmaske, zu versehen und zu beschichten, so daß eine strukturierte Beschichtung auf dem Substrat entsteht.

Eine günstige Ausführung ist, ein Konzentrationsprofil des Katalysators einzustellen, indem die zu beschichtenden Bereiche des Substrats in Flächensegmente unterteilt wird, die einzeln lokal differenziert beschichtet werden können und die sich in der Konzentration und/oder der Schichtdicke und/oder der Art und/oder der Körnung und/oder der Porosität der Beschichtung des Katalysatormaterials unterscheiden.

Eine weitere günstige Weiterbildung des Verfahrens besteht darin, das Substrat mit mehreren aufeinanderfolgenden Schritten zu beschichten. Damit kann zum einen die Schichtdicke definiert eingestellt werden. Zum anderen kann in einer Weiterbildung des Verfahrens vorteilhaft zwischen zwei aufeinanderfolgenden Beschichtungsschritten auch die Zusammensetzung und/oder die Art des Katalysatormaterials geändert werden. Der Katalysator kann so auf einfache Weise für unterschiedlichste Einsatzzwecke in seinen geometrischen Eigenschaften und/oder seiner chemischen Aktivität gestaltet werden.

Als Substrate können Grundkörper mit komplexer Struktur konturgetreu beschichtet werden, ebenso ist es möglich, große ebene Flächen homogen zu beschichten. Das zu beschichtende Substrat muß nicht saugfähig sein. Insbesondere ist es möglich, nicht oder schwer oxidierbare Substrate, etwa aluminiumfreien Edelstahl (VA), mit Katalysatormaterial zu beschichten.

Die Erfindung ist nachstehend anhand von Zeichnungen näher beschrieben, wobei
Fig. 1 eine Prinzipdarstellung eines erfindungsgemäßen Verfahrens zur Herstellung eines Katalysators aus zwei Stoffkomponenten mit einem zu beschichtenden Substrat im Schnitt,
Fig. 2 eine weitere Prinzipdarstellung eines bevorzugten Verfahrens zur Herstellung eines Katalysators aus einer Stoffkomponente mit einem beschichteten Substrat im Schnitt,
Fig. 3 eine schematische Ansicht eines Schnitts durch ein beschichtetes Substrat mit strukturierter Oberfläche, wobei (a) die Abscheidung einer ersten Teilschicht und (b) eine komplette Schicht nach einem weiteren Beschichtungsschritt zeigt, und
Fig. 4 eine weitere schematische Ansicht eines Schnitts durch ein beschichtetes Substrat mit unterschiedlicher Schichtdicke zeigt, wobei (a) eine Beschichtung mit stufenweiser Schichtdickenerhöhung und (b) eine kontinuierliche Schichtdickenzunahme zeigt.

Das erfindungsgemäße Verfahren ist für die Herstellung von Katalysatorschichten auf verschiedenartigsten Substraten und Grundkörpergeometrien geeignet. Es ist besonders vorteilhaft bei der Herstellung von Katalysatoren anzuwenden, welche in katalytisch arbeitenden Reaktoren eingesetzt werden sollen, bei denen es auf einen gleichmäßigen Energieeintrag oder Energieaustrag pro Flächeneinheit ankommt, wie etwa kombinierten Reaktoren, in denen gleichzeitig ein Energie liefernder und ein Energie verbrauchender Reaktionsprozeß ablaufen. Besonders günstig ist das erfindungsgemäße Verfahren für die Herstellung kompakter und platzsparender sogenannter Kombireaktoren, die für die Kraftstoffaufbereitung und/oder Gasreinigung in Kraftfahrzeugen mit Brennstoffzellenantrieb eingesetzt werden. Besonders geeignet ist das Verfahren auch für Substrate mit komplexen Geometrien, insbesondere auch für die Beschichtung von Wärmetauscher-Platten oder etwa katalytischer Brenner für Brennstoffzellensysteme.

Auch herkömmliche Abgaskatalysatoren werden durch die Verwendung erfindungsgemäß hergestellter Beschichtungen deutlich verbessert.

Die erfindungsgemäß hergestellten Katalysatoren sind thermisch und mechanisch hoch belastbar. Während etwa bei Abgaskatalysatoren vom Kraftfahrzeugen mit handelsüblichen Tauchschichten nach wenigen hundert Betriebsstunden nur noch etwa 30% der Beschichtung vorhanden ist, zeigt sich bei einem erfindungsgemäß hergestellten Katalysator nach ca. 800 Betriebsstunden bei vergleichbaren Betriebstemperaturen um 1000°C kein erkennbarer Schichtverlust.

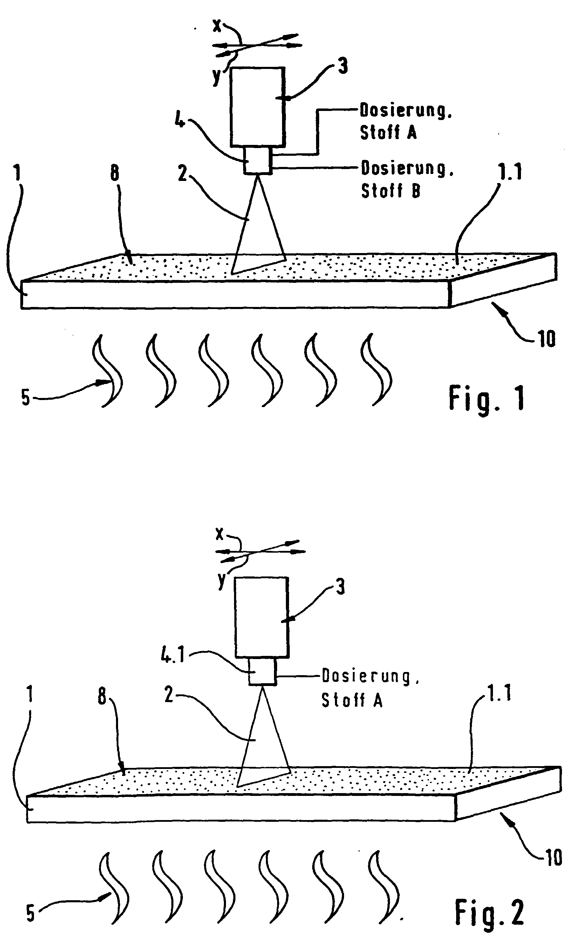

In der Fig. 1 ist eine Prinzipdarstellung eines Beschichtungsvorgangs während des erfindungsgemäßen Verfahrens zur Herstellung eines Katalysators 10 dargestellt, bei dem eine Spritzmasse 2, die aus mit Lösungsmittel 6 vermischten, vorzugsweis pulverförmigen Katalysatormaterial 7 aus geträgertem und/oder ungeträgertem katalytisch aktivem Material besteht, mittels einer Spritzvorrichtung 3 auf ein vorzugsweise metallisches Substrat 1 aufgespritzt wird.

Am Austrittsbereich 4 der Spritzvorrichtung 3 können zwei Stoffe A und B gemischt werden. Das Gemisch bildet die Spritzmasse 2. Auf der zu beschichtenden Substratoberfläche 1.1 bildet sich durch den Niederschlag der Spritzmasse 2 eine Schicht 8.

Die Stoffe A und B können in einer vorteilhaften Ausgestaltung unterschiedliche Katalysatormaterialien mit unterschiedlichen katalytisch aktiven Komponenten sein, wobei jede Komponenten mit ihrem üblichen Bindersystem und einem geeigneten Lösungsmittel versetzt sein kann. Auch Bindergehalt und/oder Lösungsmittelgehalt können unterschiedlich sein. Eine weitere günstige Ausgestaltung ist, als eine erste Stoffkomponente A eine Mischung aus Katalysatormaterial, Binder und Lösungsmittel und als zweite Komponente B nur ein gleiches oder weiters Bindersystem oder auch nur weiteres Trägermaterial ohne Beschichtung mit katalytisch aktivem Material dazuzumischen. Damit ist es möglich, während der Beschichtung etwa die chemische Aktivität oder die Körnung und/oder Festigkeit der Beschichtung zu verändern.

Wird mehr Binder in das Katalysatormaterial 7 gemischt, bildet sich eine festere, mechanisch robuste Schicht 8 auf dem Substrat 1, wird weniger Binder dazugemischt, ist die Schicht weniger fest, jedoch gegen thermische Schocks resistenter. So kann durch Änderung der Mischungsverhältnisses zwischen den Komponenten A und B in einem Beschichtungsgang beispielsweise die Beschichtung an die voraussichtliche thermische Belastung des Substrats im Betrieb angepaßt werden.

Das Substrat 1 und die Spritzvorrichtung 3 können lateral gegeneinander verschoben werden, was in der Figur durch die Pfeile in x- und y-Richtung angedeutet ist. Die laterale Bewegung kann stufenweise oder kontinuierlich erfolgen.

Das Substrat 1 wird durch eine Wärmequelle 5 auf eine Temperatur T erhitzt, bei der das Lösungsmittel 6 schnell verdampft- Vorteilhaft ist eine Temperatur T, die mindestens dem Siedepunkt des Lösungsmittels 6 entspricht. Andererseits kann die Temperatur T relativ niedrig sein, da sie in der Nähe des Siedepunkts gewählt werden kann. Die Spritzmasse 2 trocknet schnell auf dem heißen Substrat 1 ab, und eine poröse Schicht 8 aus Katalysatormaterial 7 bleibt zurück.

In Fig. 2 ist eine weitere Prinzipdarstellung eines Beschichtungsvorgangs des erfindungsgemäßen Verfahrens zur Herstellung eines Katalysators 10 dargestellt. Der Aufbau entspricht weitestgehend dem in der Fig. 1 dargestellten System.

Auf ein Substrat 1 wird eine Spritzmasse 2, die aus einem Gemisch aus Lösungsmittel 6 mit Binder und Katalysatormaterial 7 besteht, mittels einer Spritzvorrichtung 3 auf ein Substrat aufgespritzt, wobei Spritzmasse 2 als Komponente A am Austrittsbereich 4 der Spritzvorrichtung 3 zugeführt wird. Auf der Substratoberfläche 1.1 des erhitzten Substrats 1 bildet sich eine poröse Schicht 8.

Bei der Mischung von Katalysatormaterial 7 und Lösungsmittel 6 können die Mischungsverhältnisse in weiten Bereichen gewählt werden. Zweckmäßigerweise wird der Lösungsmittelgehalt passend zur Korngröße des Katalysatormaterials und zur Art der verwendeten Düse der Spritzvorrichtung ausgewählt. Ein günstiger Bereich ist etwa ein Anteil von 60 bis 95 Volumenprozent Lösungsmittel, es kann jedoch auch systemabhängig erheblich weniger Lösungsmittel zugegeben werden.

Das Katalysatormaterial 7 ist vorzugsweise ein Pulver, in dem katalytisch aktives Material selbst als Pulver und/oder als Beschichtung auf Trägerpartikeln vorliegt. Bevorzugte Trägerpartikel sind etwa Keramik, Metall, Kunststoff, z.B. Al₂O₃, SiO₂, Zeolith, ZrO₂, CeO₂ und/oder Mischungen davon. Günstig sind Materialien mit hoher Oberfläche.

Zweckmäßigerweise ist das Katalysatormaterial 7 beim Spritzen noch mit einem üblichen Binder versehen. Als katalytisch aktive Materialien sind sowohl Oxide, wie z.B. Cu-Zn-O, als auch Metalle wie Edelmetalle oder Legierungen geeignet, wie z.B. Ni und/oder Pt, Pd, Ir, Rh, Ru, Cu und/oder Mischungen davon.

In der Schicht 8 bilden sich durch das beim oder kurz nach dem Auftreffen auf das erhitzte Substrat 1 verdampfende Lösungsmittel 6 zahlreiche Mikroporen, so daß die Beschichtung 8 eine große aktive Oberfläche aufweist. Die Partikel der Schicht 8 sind beim Auftreffen im wesentlichen lokal fixiert und können die Oberfläche des Substrates 1 konturgenau nachbilden, ohne unerwünschte Schichtverdickungen an Unebenheiten des Substrats 1 zu bilden. Das Substrat 1 kann demnach beliebige Konturen aufweisen. Als Substratmaterial ist Metall und/oder Keramik günstig.

Zweckmäßigerweise wird die zu beschichtende Oberfläche 1.1 vor der Beschichtung aufgerauht. Die kann mit chemischen Ätzverfahren erfolgen oder auch mit mechanischen Mitteln wie etwa Sandstrahlen oder Schleifen.

Wird ein Gewebe, z.B. vorzugsweise ein metallisches Vlies, als Substrat 1 verwendet, ist das erfindungsgemäße Verfahren besonders vorteilhaft. Das Katalysatormaterial 7 umhüllt beim Spritzen die Gewebefasern konturgetreu. Damit gelingt die Herstellung von Katalysatoren mit einer besonders großen Katalysatoroberfläche auf einem im wesentlichen flexiblen Substrat und mit guter Haftfestigkeit auf dem Substrat. Bei einem üblichen Tauchverfahren besteht die Gefahr, daß das Katalysatormaterial nicht gleichmäßig in das Innere des Gewebes eindringen kann, sondern die Gewebekanäle verstopft.

Ist das Katalysatormaterial 7 noch mit einem Binder versehen, so wird anschließend das Substrat 1 zum Calcinieren der Schicht 8 auf eine weitere, für das jeweilige verwendete System geeignete Temperatur T' erhitzt werden. Beim dieser thermischen Behandlung wird der Binder aktiviert und vernetzt die Schicht dreidimensional. Die Haftung der Schicht 8 in sich und am Substrat 1 wird dabei verbessert. Die Schicht 8 ist porös mit Mikroporen und Makroporen und ist gut haftend mit dem Substrat 1 verbunden.

Die Partikelgröße des verwendeten Katalysatormaterials kann nach der gewünschten Festigkeit und/oder Flexibilität der Katalysatorschicht 8 ausgewählt werden. Bei der Verwendung von geträgertem Katalysatormaterial 7 wird die Schicht 8 um so dichter und um so fester, je kleiner die Partikelgrößen des Trägers sind. Solche Schichten 8 sind besonders für den Einsatz mit geringer thermischer Belastung und großer Erosionsbeanspruchung geeignet. Soll die Schicht 8 stärkeren thermischen Belastungen ausgesetzt werden, sind größere Partikel günstig, da unterschiedliche thermische Ausdehnungskoeffizienten leichter von der Schicht 8 ausgeglichen werden können.

Ein geeignetes Katalysatormaterial für einen bevorzugten Einsatz bei katalytisch beheizten Wärmetauschern in Brennstoffzellensystemen ist mit Platin beschichtetes Al₂O₃ mit 5-10Gew.% Platin-Anteil. Als geeigneter Binder wird Böhmit (Al-O-OH) verwendet oder auch Kieselsäuren.

Es ist jedoch die Verwendung beliebiger Katalysatormaterialien und Bindersysteme möglich, welche in Pulverform darstellbar und mit einem Spritzverfahren verarbeitbar sind. Für die ausgewählten katalytisch aktiven Materialien können Binder- und Lösungsmittelsysteme entsprechend ausgewählt und angepaßt werden. Günstige Bindersysteme sind keramische Vorstufen des Trägerpartikelmaterials, falls keramisches Trägermaterial verwendet wird oder Kieselsäure, Acetate, Nitrate.

Lösungsmittelgehalt, Binderanteil, Partikelgröße sind in weiten Bereichen variierbar und können entsprechend der gewünschten Porosität der Beschichtung und/oder Schichtdicke und/oder thermischen und/oder mechanischen Belastbarkeit des Katalysators sowie für die ausgewählte Spritzvorrichtung optimiert werden.

Bei einer Temperaturbeanspruchung im späteren Einsatz des Katalysators um oder über 1000°C sind Partikelgrößen des Trägers oder des Katalysatormaterials zwischen 5-10 µm zweckmäßig, bei Temperaturen unterhalb von 1000°C sind Partikelgrößen zwischen 1 bis 3 µm günstig. Eine günstige Schichtdicke der Katalysatorschicht 8 liegt bei etwa 10 bis 40 µm; die Schichtdicke kann jedoch nach Bedarf für den jeweiligen Einsatzzweck eingestellt werden. Die Lötbarkeit der Substrate nimmt bei zunehmender Korngröße der Trägerpartikel zu. Vorzugsweise werden Korngrößen ab etwa 10 µm für nach der Beschichtung zu lötende Substrate verwendet.

Im Gegensatz zu üblichen Tauchschichten kann die Dicke der Katalysatorschicht 8 in einem einzigen Beschichtungsgang grundsätzlich gering sein. Auch im Vergleich zum Verfahren in der DE 16 42 921 kann die Auftragung auf das Substrat 1 sehr definiert und fein steuerbar erfolgen. In einem einzigen Beschichtungsgang ist es möglich, eine Beschichtung aufzutragen, deren Dicke höchstens etwa das Doppelte der mittleren Partikelgröße des Katalysatormaterials 7 ist. Dies wird durch die definierte Bewegung zwischen Spritzvorrichtung 3 und dem Substrat 1 möglich. Bei entsprechend feinkörnigem Ausgangsmaterial können so sehr dünne Schichten, z.B. um 1 µm, in einem einzigen Beschichtungsgang abgeschieden werden. Wird eine größere Schichtdicke gewünscht, werden mehrere Beschichtungsgänge hintereinander durchgeführt.

Als Lösungsmittel 6 besonders geeignet sind Lösungsmittelsysteme, welche mit dem Katalysatormaterial 7 Suspensionen bilden, besonders geeignet sind polare Lösungsmittelsysteme. Besonders geeignet ist Wasser oder höhersiedende Alkohole. Wasser hat den großen Vorteil, daß es nicht entflammbar ist und umweltverträglich, so daß für das erfindungsgemäße Verfahren keine besonderen Maßnahmen beim Spritzen, Erhitzen oder Entsorgen der Abfallprodukte zu treffen sind.

Bei Wasser als Lösungsmittel 6 liegen bevorzugte Substrattemperaturen beim Spritzen zwischen 150°C und 300°C. Günstige Gehalte an Binder in der Spritzmasse 2 liegen bei 5 Gew.% bis 40 Gew.% (Gewichtsprozent), besonders bevorzugt 7 Gew.% bis 30 Gew.% Binderanteil, wobei sich die Gewichtsprozente auf das geträgerte Katalysatormaterial beziehen. Je mehr Binder zugegeben wird, desto dichter ist Schicht 8. Derartige Schichten 8 weisen eine hohe Erosionsbeständigkeit auf, sind jedoch thermisch etwas weniger belastbar als weniger dichte Schichten 8.

Als Spritzverfahren und Spritzvorrichtungen sind im Prinzip alle verwendbar, bei denen Spritzmassen verdüst werden können. Verschiedene Spritzvorrichtungen sind z.B. aus der Lackiertechnik bekannt und für das erfindungsgemäße Verfahren prinzipiell geeignet.

Bei sogen. Luftzerstäubern ist ein Feststoffgehalt von 5% bis maximal 50% günstig. Bei sogen. Airless-Zerstäubern ist ein hoher Feststoffanteil um 50% günstig. Der jeweilig optimale Feststoffanteil hängt von verschiedenen Parametern ab, sowohl von der gewählten Düse als auch von der Partikelgröße der Spritzmasse 2, die verarbeitet werden soll. Die Korngröße der Spritzmasse 2 kann bei handelsüblichen Düsen über weite Bereiche wie etwa 0,3 µm bis 50 µm variieren. Die Dichte der Schicht kann demnach für den gewünschten Einsatzzweck geeignet gewählt werden.

Ein besonderer Vorteil ist, daß das Beschichtungsverfahren ein sehr schonendes Verfahren darstellt, da die katalytische Aktivität des Katalysatormaterials durch die Auftragung nicht eingeschränkt wird. Die Porosität der aufgetragenen Schicht hängt im wesentlichen von der Porosität des Trägermaterials ab.

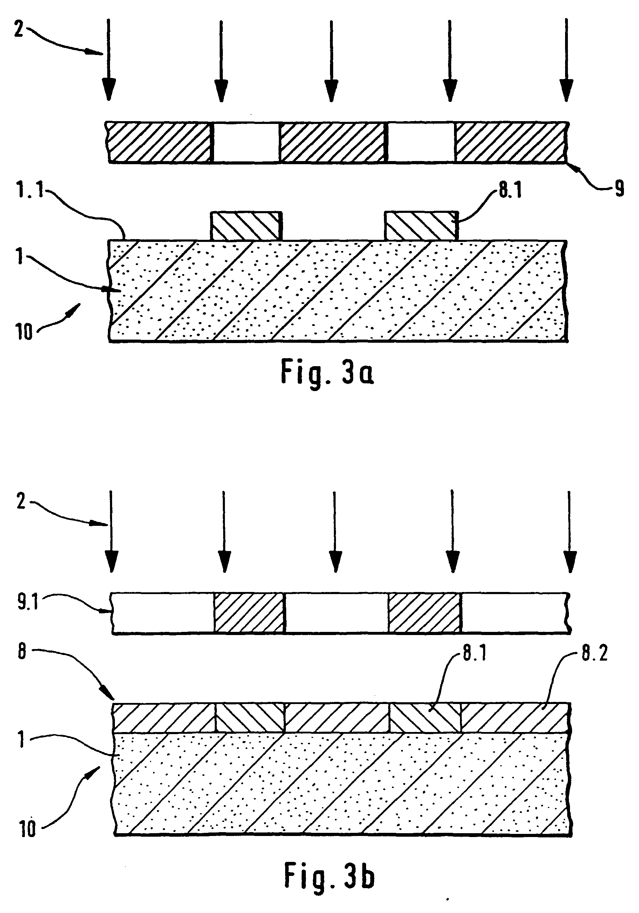

In Fig. 3 ist ein Querschnitt durch einen Katalysator 10 dargestellt, welcher eine lateral strukturierte Katalysatorschicht 8 aufweist. Im ersten Teilbild (3a) wird die zu beschichtende Oberfläche 1.1 eines Substrats 1 durch eine Lochmaske 9 hindurch mit Spritzmasse 2 beschichtet. In den den Maskendurchlässen Bereichen schlagen sich Schichtbereiche 8.1 nieder. Diese sind durch nichtbeschichtete Substratbereiche getrennt. Die Katalysatorschicht 8 besteht nunmehr aus katalytisch aktiven Inseln 8.1 auf dem Substrat 1.

Im zweiten Teilbild (3b) wird durch eine komplementäre Maske hindurch weitere Spritzmasse 2 auf dasselbe Substrat 1 abgeschieden, wobei Katalysatormaterial 7 als Schichtbereiche 8.2 zwischen den Inseln 8.1 deponiert wird. Dieses Material kann vom Material der Inseln 8.1 chemisch und/oder bzgl. Partikelgröße, Dicke und/oder anderen physikalischen Parametern verschieden sein. Die Katalysatorschicht 8 ist nunmehr aus einer geschlossenen Schicht mit lokal unterschiedlich und strukturiert vorgegebenen Eigenschaften gebildet.

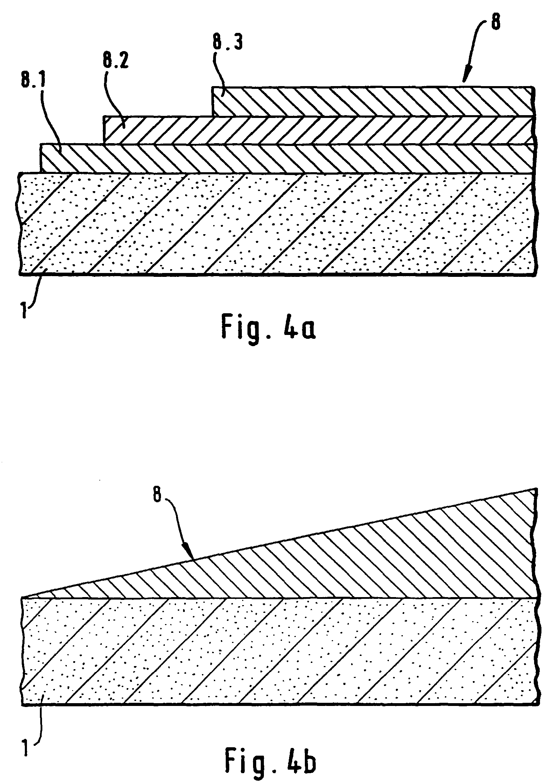

In Fig. 4 ist skizzenhaft ein erfindungsgemäß hergestellter Katalysator 10 dargestellt, dessen Beschichtung in vertikaler Richtung variiert. Im ersten Teilbild (4a) wird die Dicke der Schicht 8 stufenweise durch Aufeinanderstapeln von Teilschichten 8.1, 8.2, 8.3 erhöht. Dies kann analog zu dem Verfahren in Fig. 3 mittels einer Maskentechnik erfolgen oder auch durch eine stufenweise relative Verschiebung der Spritzvorrichtung 3 gegenüber dem Substrat 1. Die Teilschichten können aus gleichartigem Material gebildet sein, sie können jedoch auch verschiedenes Material aufweisen. Eine günstige Ausbildung besteht darin, daß etwa mehrere Teilschichten 8.1, 8.2, 8.3 mit unterschiedlichem Katalysatormaterial 7 und/oder unterschiedlicher katalytischer Aktivität lateral versetzt übereinander angeordnet sind.

Im Teilbild (4b) ist eine Katalysatorschicht 8 auf einem Substrat 1 abgebildet, deren Dicke kontinuierlich anwächst.

Dies kann durch eine entsprechende Veränderung der Vorschubgeschwindigkeit zwischen Spritzvorrichtung 3 und Substrat 1 erzielt werden.

Es ist auch möglich, einen Katalysator 10 herzustellen, dessen Eigenschaften sowohl in lateraler als auch in vertikaler Richtung variieren. Dazu können einzelne oder mehrere Beschichtungsschritte wie in Fig. 3 und Fig. 4 dargestellt miteinander kombiniert werden. So kann eine Schicht 8 hergestellt werden, deren Dicke und deren katalytische Aktivität graduell oder stufenweise längs des Substrats 1 unterschiedliche ist. Die Zusammensetzung der Spritzmasse 2 und/oder die Körnung und/oder die Dichte des Katalysatormaterials 7 in der Schicht 8 können während der Beschichtung diskontinuierlich und/oder kontinuierlich verändert werden.

Ganz besonders vorteilhaft ist, daß mit dem erfindungsgemäßen Verfahren eine Katalysatorschicht hergestellt werden kann, die in sich vorzugsweise homogen ist, jedoch längs der Lauflänge des Katalysators ein gezielt eingestelltes Profil der katalytischen Aktivität aufweist. Für einen katalytischen Brenner in einem Brennstoffzellensystem ist es vorteilhaft, wenn die katalytische Aktivität am Eingang des Katalysators geringe ist und z.B. exponentiell entlang der Lauflänge zunimmt. Dies läßt sich mit dem erfindungsgemäßen Verfahren einfach realisieren oder zumindest annähern, indem Katalysatormaterial jeweils streifenweise abgeschieden wird. Es kann selbstverständlich auch ein anderes Profil der katalytischen Aktivität nachgebildet werden, etwa eine lineare oder ein quadratische Zunahme der Aktivität.

Dabei wird jeweils der Gehalt des katalytisch aktiven Materials in der Spritzmasse von einem Streifen zum nächsten verändert, wobei die sonstigen Eigenschaften wie Korngröße des Trägermaterials, Schichtdicke, Bindergehalt der Spritzmasse etc. gleichbleiben kann. Je feiner die Streifen unterteilt sind, desto näher kommt die katalytische Aktivität der Schicht dem gewünschten Aktivitätsprofil entlang der Lauflänge.

Eine weitere Möglichkeit bei Verwendung einer Spritzvorrichtung gemäß Fig. 1 besteht darin, daß während des Beschichtungsvorgangs ein Mischungsverhältnis der Komponenten A und B verändert wird. Auch dieser Verfahrensschritt ist mit Verfahrensschritten der Fig. 3 und Fig. 4 kombinierbar.

In einem bevorzugten Verfahren wird eine Suspension aus Katalysatormaterial, Binder und Wasser hergestellt, z.B. 50 g Katalysator, 7,5 g Binder und 200 ml Wasser. Diese wird anschließend gemahlen, bis die gewünschte Korngröße der Trägerpartikel erreicht ist, z.B. 1-2 h. Die Suspension wird in die Spritzvorrichtung gefüllt und auf ein Substrat 1 aufgespritzt, welches auf 250°C-300°C erhitzt wurde.

Nach der Beschichtung wird das Substrat zum Calcinieren der Schicht noch bei etwa 500°C etwa 2 Stunden gehalten, was im Vakuum oder in Schutzgasatmosphäre erfolgen kann.

Besonders bevorzugt wird das Verfahren zur Herstellung von Katalysatoren in Brennstoffzellensystemen eingesetzt, welche zur katalytischen Oxidation in katalytischen Brennern, zur partiellen Oxidation von Brennmitteln, z.B. Methanol, zur selektiven Oxidation z.B. von CO, zur Wassergas-Shiftreaktion und zur Dampfreformierung verwendet werden und/oder zur Herstellung von Elektroden der Brennstoffzellen selbst. Besonders vorteilhaft ist, daß wasserstoffdichte Edelstahlsubstrate mit Katalysatormaterial beschichtet werden können, auf welchen mit anderen Beschichtungsverfahren keine ausreichende Haftung der katalytischen Schicht erzielt werden kann.

Bevorzugt werden mit dem erfindungsgemäßen Verfahren Einheiten oder zumindest Bauteile für Reformer und/oder Shiftstufen und/oder katalytische Brenner und/oder Kohlenmonoxid-Oxidationseinheiten und/oder Nachbrenner-Einheiten für Brennstoffzellenanlagen hergestellt.

## Patentansprüche

1. Verfahren zur Herstellung eines Katalysators (10), bei dem ein katalysatorhaltiges Material mit einem Lösungsmittel (6) vermischt und auf einem über den Siedepunkt des Lösungsmittels (6) erwärmten Substrat (1) abgeschieden wird,
dadurch gekennzeichnet,
daß zur Herstellung einer Suspension ein Lösungsmittel (6) und ein Pulver aus katalytisch aktivem Material und/oder aus katalytisch beschichteten Trägerpartikeln verwendet wird, daß die Suspension in einer Spritzmasse (2) in definierter Weise auf das Substrat (1) aufgespritzt und eine katalysatorhaltige Schicht (8) gebildet wird.

2. Verfahren nach Anspruch 1,
dadurch gekennzeichnet,
daß der Spritzmasse (2) ein Binder zwischen 5 Gewichtsprozent und 40 Gewichtsprozent bezogen auf das Katalysatormaterial (7) zugegeben wird.

3. Verfahren nach Anspruch 1 oder 2,
dadurch gekennzeichnet,
daß die Trägerpartikel für die katalytisch beschichteten Trägerpartikel aus einem Binder gebildet werden.

4. Verfahren nach Anspruch 2 oder 3,
dadurch gekennzeichnet,
daß anschließend der Binder in der Schicht (8) thermisch aktiviert wird, so daß die Schicht (8) zumindest bereichsweise dreidimensional vernetzt wird.

5. Verfahren nach Anspruch 1,
dadurch gekennzeichnet,
daß das Katalysatormaterial (7) vor dem oder beim Spritzen mit 60 bis 95 Volumenprozent Lösungsmittel (6) versetzt wird.

6. Verfahren nach Anspruch 1 oder 5,
dadurch gekennzeichnet,
daß Wasser als Lösungsmittel (6) verwendet wird.

7. Verfahren nach Anspruch 1,
dadurch gekennzeichnet,
daß die Spritzmasse (2) in einem lokal begrenzten Sprühstrahl auf das Substrat (8) gerichtet wird und zur Bildung der katalysatorhaltigen Schicht (8) das Substrat (8) und der Sprühstrahl in definierter Weise relativ gegeneinander bewegt werden.

8. Verfahren nach Anspruch 1,
dadurch gekennzeichnet,
daß in einem einzigen Beschichtungsgang eine Schicht (8) mit einer durchschnittlichen Dicke von etwa dem Doppelten der mittleren Partikelgröße des Katalysatormaterials (7) aufgespritzt wird.

9. Verfahren nach Anspruch 1,
dadurch gekennzeichnet,
daß die katalysatorhaltige Schicht (8) mit einem vorgegebenen Dickengradienten auf dem Substrat (1) abgeschieden wird.

10. Verfahren nach Anspruch 1,
dadurch gekennzeichnet,
daß die Zusammensetzung der Spritzmasse (2) und/oder die Körnung und/oder die Dichte des Katalysatormaterials (7) in der Schicht (8) während der Beschichtung diskontinuierlich verändert werden.

11. Verfahren nach Anspruch 1,
dadurch gekennzeichnet,
daß die Zusammensetzung der Spritzmasse (2) und/oder die Körnung und/oder die Dichte des Katalysatormaterials (7) in der Schicht (8) während der Beschichtung kontinuierlich verändert werden.

12. Verfahren nach einem der vorangegangenen Ansprüche,
dadurch gekennzeichnet,
daß die katalysatorhaltige Schicht (8) auf einem im wesentlichen plattenförmigen Grundkörper und/oder auf Gewebe abgeschieden wird.

13. Verfahren nach einem der vorangegangenen Ansprüche,
dadurch gekennzeichnet,
daß die katalysatorhaltige Schicht (8) auf einem Chromstahl-Grundkörper abgeschieden wird.

14. Verfahren nach einem der vorangegangenen Ansprüche,
dadurch gekennzeichnet,
daß die katalysatorhaltige Schicht (8) auf einem Grundkörper aus aluminiumfreien Stahl abgeschieden wird.
